# EUROPEAN PATENT APPLICATION

(11) **EP 4 694 042 A1**
(43) Date of publication of application: **11.02.2026**
(21) Application number: 24785015.9
(22) Date of filing: 15.01.2024
(51) Int. Cl.: H04L 12/14, H04L 67/306

(54) **METHOD FOR GRADING ACCOUNTS ON BASIS OF AMOUNT OF APPLICATION USAGE**

(30) Priority: 05.04.2023 KR 20230044540
(71) Applicant: C.G.Tae Technology Co., Inc., Seongnam-si Gyeonggi-do 13595 (KR)
(72) Inventor: TAE, Chulgyu, Seongnam-s Gyeonggi-do 13595 (KR); TAE, Choe, Incheon 21984 (KR)
(74) Representative: Zacco Sweden AB
(86) International application number: PCT/KR2024/000701
(87) International publication number: WO 2024/210304

(57) **Abstract**

One objective of the embodiments according to the present disclosure is to enable reasonable fee charging based on the actual usage of each account for applications, including cloud infrastructure.
To this end, a method for assigning ratings to accounts based on application usage according to one embodiment of the present disclosure includes: a step of calculating application usage of the account in a first period by receiving usage analysis data for one or more predetermined monitoring target applications from each of one or more user devices associated with the account; and a step of determining, based on the application usage of the account in the first period, whether to assign a paid account or a free account to the account in a second period after the first period.

## Description

### TECHNICAL FIELD

The present disclosure relates to a method for assigning ratings to accounts based on application usage, and more particularly, to a method for assigning ratings to each account based on data regarding application usage of accounts belonging to an institution and the number of devices associated with the accounts, and charging fees based on the assigned ratings.

### BACKGROUND

A cloud service provider (CSP) provides users with cloud infrastructure, and users are able to use desired application services through the cloud infrastructure without directly installing applications on their own user devices.

A cloud managed service provider (MSP), in partnership with a CSP, not only provides the cloud services of the CSP to various users such as companies, public institutions, schools, individuals, or the like, optimized for the environment of each organization, but also plays a role in providing maintenance. For example, the MSP may partner with many CSPs and recommend the most suitable combination of services (for example, not only cloud product recommendations provided by each CSP, but also hybrid cloud, multi-cloud, or the like) to specific organizations from among the services provided by the CSP partners.

In order to use cloud services, a user creates an account, and it is general that the user receives the cloud services through the created account. For example, the user uses the cloud services by subscribing to a specific plan for the cloud services. In the case of an institution such as a school, a company, or the like, accounts are created for all members within the institution, and since a paid subscription must be assigned to all accounts, even members who actually do not use the cloud services or rarely use the cloud services are assigned a paid subscription, resulting in a problem that the institution incurs expenses more than necessary.

### SUMMARY

### TECHINCL OBJECTS

Accordingly, an object of the present disclosure is to enable reasonable pricing based on actual usage of each account for applications including cloud infrastructure.

However, the problems to be solved by the present disclosure are not limited to the above, and may include other objects that are not mentioned but can be clearly understood by those skilled in the art to which the present disclosure pertains from the following description.

### TECHNICAL SOLUTION

According to the method for assigning ratings to accounts based on application usage of the present disclosure, comprising: calculating application usage of the account in a first period by receiving usage analysis data based on a graphical user interface in the first period for one or more monitoring target applications predetermined from each of one or more user devices associated with the account; and determining whether to assign a paid account or a free account to the account in a second period after the first period based on the application usage of the account in the first period.

The method for assigning ratings to accounts based on application usage according to claim 1, wherein the determining whether to assign a paid account or a free account to the account in the second period is further based on the number of user devices that used the one or more monitoring target applications.

The method for assigning ratings to accounts based on application usage according to claim 1, wherein the calculating of the application usage of the account in the first period includes determining whether the account uses an application, and wherein, based on the application usage of the account in the first period, the determining whether to assign a paid account or a free account to the account in the second period after the first period includes determining to assign a free account to the account based on a determination that the account did not use the application.

The method for assigning ratings to accounts based on application usage according to claim 1, further comprising: in response to determining to assign a paid account to the account, assigning one rating among a plurality of predetermined ratings to the account based on detailed analysis data for the application usage.

The method for assigning ratings to accounts based on application usage according to claim 4, wherein the detailed analysis data includes usage analysis data collected based on a graphical user interface (GUI) of a user device by a usage analysis application executed on each of the one or more devices associated with the account.

The method for assigning ratings to accounts based on application usage according to claim 1, wherein, in the step of determining whether to assign a paid account or a free account to the account in a second period after the first period, the application usage of the account in the first period for one or more monitoring target applications designated in advance includes a frequency of use dates of the account.

The method for assigning ratings to accounts based on application usage according to claim 4, further comprising: charging a service fee on the account based on the rating assigned to the account, wherein the service fee is charged differently for each of the plurality of ratings.

The method for assigning ratings to accounts based on application usage according to claim 4, further comprising: after the assigning of one rating among a plurality of predetermined ratings to the account based on detailed analysis data for the application usage, allowing a rating higher than the rating assigned to the account to be temporarily used when the application usage becomes greater than a predetermined reference value, or allowing a rating lower than the rating assigned to the account to be used when the application usage becomes less than the predetermined reference value.

The method for assigning ratings to accounts based on application usage according to claim 5, wherein the collecting of usage analysis data based on a graphical user interface (GUI) of a user device by the usage analysis application comprises: executing the usage analysis application on the device, initiating session monitoring for the device by the usage analysis application, determining, by the usage analysis application, a monitoring target application among a plurality of applications of the device to perform a collection process, wherein the determining of the monitoring target application includes sequentially determining, for each application currently being executed on the user device, whether the application is included in a preset monitoring application list, and generating usage analysis data by performing, by the usage analysis application, the collection process for the monitoring target application.

The method for assigning ratings to accounts based on application usage according to claim 9, wherein the generating of usage analysis data by performing the collection process for the monitoring target application by the usage analysis application comprises: assigning different state identifiers according to whether a graphical user interface (GUI) of each monitoring target application is displayed on a screen of the device, and assigning different state identifiers according to whether the application is arranged in a foreground even if displayed on the screen.

According to the management server for implementing a method for assigning differential ratings to an account based on application usage of the account of the present disclosure, comprising: a processor and a memory including computer-executable instructions, wherein the computer-executable instructions, when executed by the processor, cause the processor to implement: an application usage calculation module for calculating application usage of the account in a first period by receiving, from one or more user devices associated with the account, usage analysis data based on a graphic user interface for one or more monitoring target applications designated in advance in the first period, and an account rating assigning module for determining whether to assign a paid account or a free account to the account in a second period after the first period based on the application usage of the account in the first period.

According to the computer-readable recording medium storing computer-executable instructions of the present disclosure, wherein the computer-executable instructions, when executed by a processor, cause the processor to perform operations comprising: calculating application usage of an account in a first period by receiving, from one or more user devices associated with the account, usage analysis data based on a graphic user interface for one or more monitoring target applications designated in advance in the first period, and determining, based on the application usage of the account in the first period, whether to assign a paid account or a free account to the account in a second period after the first period.

### ADVANTAGEOUS EFFECTS

According to embodiments of the present disclosure, by assigning paid accounts or free accounts to each account based on actual application usage of each account and the like, and by assigning ratings in the case of paid accounts, it is possible not only to reasonably calculate application usage fees to be paid by each account or by institutions to which the accounts belong, but also to provide grounds for being protected against indiscriminate threats of copyright law violations, thereby producing remarkable effects.

According to embodiments of the present disclosure, application usage patterns and habits of each account and of institutions to which the accounts belong may be identified, and accordingly, effects of effectively managing kinds, numbers, and the like of applications to be used by each account or by the institutions may be obtained.

However, the effects obtainable from the present disclosure are not limited to the effects mentioned above, and other effects not mentioned may be clearly understood by those skilled in the art to which the present disclosure pertains from the following description.

### BRIEF DESCRIPTION OF THE DRAWINGS

The following drawings attached to the present specification illustrate preferred embodiments of the present disclosure, and serve to further understand the technical idea of the present disclosure together with the detailed description of the invention, and therefore, the present disclosure should not be construed as being limited only to the matters described in such drawings.
FIG. 1 is a diagram illustrating an example of a system for analyzing application usage and assigning ratings to accounts based thereon according to an embodiment of the present disclosure.
FIG. 2 is a diagram schematically illustrating a management server according to an embodiment of the present disclosure.
FIG. 3 is a flowchart illustrating a method for assigning ratings to accounts based on application usage according to an embodiment of the present disclosure.
FIG. 4 is a flowchart illustrating a method of collecting usage analysis data for applications according to an embodiment of the present disclosure.
FIG. 5 is a diagram illustrating a specific example of a usage analysis data collection process based on a graphical user interface according to an embodiment of the present disclosure.

### DETAILED DESCRIPTION OF EMBODIMENTS

Hereinafter, exemplary embodiments will be described in detail with reference to the accompanying drawings so that those skilled in the art to which the present disclosure pertains can easily carry out the present disclosure. However, the present disclosure may be embodied in various different forms and is not limited to the examples described herein. In addition, in describing the operating principles of preferred embodiments of the present disclosure in detail, if a detailed description of related known functions or configurations is determined to unnecessarily obscure the gist of the present disclosure, the detailed description thereof will be omitted.

Further, throughout the drawings, the same reference numerals are used for parts having similar functions and operations. In the entire specification, when it is stated that a specific part is connected with or located above/below another part, this includes not only a case where it is directly connected or located above/below, but also a case where it is indirectly connected or located above/below with another component interposed therebetween.

Furthermore, in the entire specification, when a part is said to "include" a certain component, this means that, unless specifically stated otherwise, it does not exclude other components but may further include other components.

The terms "first," "second," and the like may be used to describe various components, but such components should not be limited by the terms. That is, the terms are used only for the purpose of distinguishing one component from another. For example, without departing from the scope of the present disclosure, a first component may be referred to as a second component, and similarly, the second component may also be referred to as the first component. The term "and/or" includes any and all combinations of a plurality of related listed items, or any one of a plurality of related listed items.

Also, unless specifically stated otherwise, an expression in the singular form as used in the present specification is intended to include one or more entities. Finally, as used in the present specification, the term "or" means a non-exclusive "or" unless otherwise specifically stated.

In addition, the terms used in the present disclosure have been selected from currently widely used general terms in consideration of the functions in the present disclosure; however, such terms may vary depending on the intention of a person skilled in the art, precedents, or the emergence of new technologies. Also, in some cases, terms arbitrarily selected by the applicant are used, and in this case, the meanings thereof will be described in detail in the description of the invention to which they pertain. Therefore, the terms used in the present disclosure should be defined based on the meanings of the terms and the contents throughout the present disclosure, rather than merely on the names of the terms.

### A system for assigning ratings to accounts based on application usage

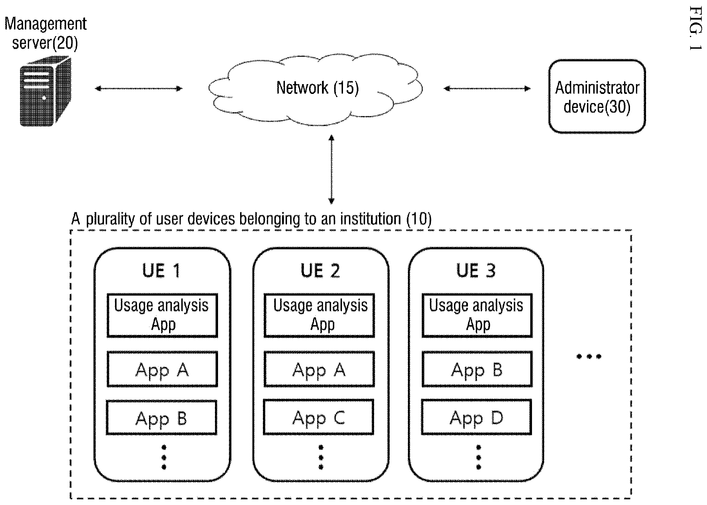

FIG. 1 is a diagram illustrating an example of a system for analyzing application usage and assigning ratings to accounts based thereon according to an embodiment of the present disclosure.

Referring to the system illustrated in FIG. 1, a plurality of user devices 10 belonging to an institution may be connected to a management server 20 through a network 15. In the example of FIG. 1, only the case in which a single institution is connected to the management server 20 is illustrated, but this is merely for the convenience of explanation. The management server 20 may receive and store application usage analysis data for a plurality of institutions and may assign ratings to accounts of each institution based on the data. An administrator may manage applications for a plurality of institutions through the management server 20 and/or an administrator device 30.

Meanwhile, in some cases, the plurality of user devices 10 may be connected to an institution server not shown operated by various institutions such as companies, schools, public institutions, research institutes, or the like, and the institution server not shown may serve to manage the plurality of user devices 10 and data within the institution.

According to an embodiment of the present disclosure, a plurality of applications App A, B, C, D, and the like may be executed on user devices UE1, UE2, UE3, and the like of officers, employees, or members of each institution. Here, the plurality of applications executed on a user device may include not only applications for which installation files are installed on the user device, but also applications provided in a cloud form to be executable on the user device.

According to an embodiment of the present disclosure, a usage analysis application (usage analysis App) may be executed on each of the plurality of user devices 10 belonging to the institution. The usage analysis application may be installed on the user device, or may be executed on the user device by external resources in a cloud form. Such a usage analysis application may collect usage analysis data for at least one application determined as a monitoring target application among applications App A, B, C, D, and the like executed on individual user devices UE1, UE2, UE3, and the like and may transmit the collected usage analysis data to the management server 20.

The monitoring target application may be an application determined by the usage analysis application to be analyzed for usage among a plurality of applications executed in each of a plurality of user devices belonging to an institution. The monitoring target application may be an application designated by an administrator through the management server 20 or an administrator device 30, or may be an application determined as an analysis target by the usage analysis application among monitoring target applications that can be added or removed.

The user device 10 and the administrator device 30 may be any devices having a display capable of presenting the graphical user interface of applications, such as personal computers (PCs), laptops, tablets, mobile phones, wearable devices, and the like, and may be devices capable of being connected to the management server 20.

The network 15 may be a wired or wireless network, and the user device 10 may be connected to the network 15 through a wired LAN cable, or may be connected to wireless Internet and the like at a location where a wireless access point, AP, is installed through Wi-Fi, 3G/4G/5G data networks, or may be connected to the network 15 by transmitting and receiving wireless signals with peripheral devices wirelessly, and the specific connection method is not limited thereto.

### Management server

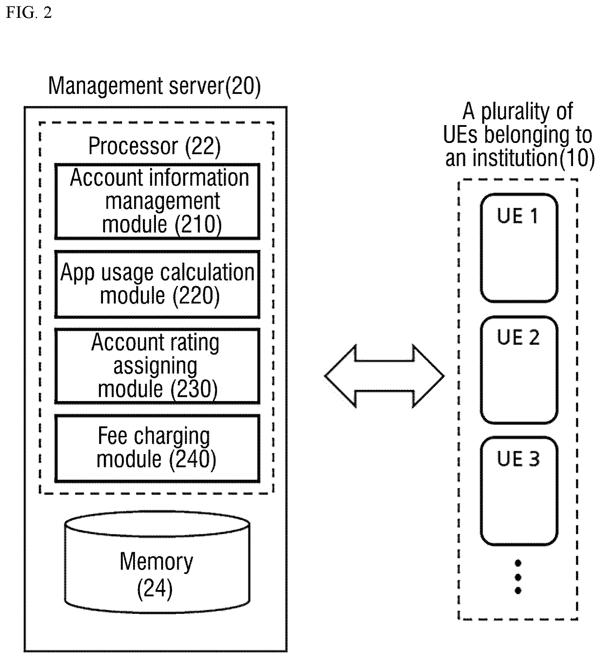

FIG. 2 is a diagram schematically illustrating a management server according to an embodiment of the present disclosure.

Referring to FIG. 2, a management server 20 according to an embodiment of the present disclosure may include a processor 22 and a memory 24 including computer-executable instructions. When executed by the processor 22, the computer-executable instructions may operate to cause the processor to implement an account information management module 210, an application usage calculation module 220, an account rating assigning module 230, and a fee charging module 240. However, such modules 210, 220, 230, and 240 may be implemented not in a software form but in a hardware form, or may be implemented in a mixed form of the two, and are not limited thereto.

The account information management module 210 may register one or more user devices associated with a user in an account. In the case where a user using one account has a plurality of devices, or in the case where two or more users are linked to one account, a plurality of user devices and a plurality of users may be registered in the account.

Account information of each account may be generated based on user information input by the user, device names authenticated by the user, MAC addresses, and the like, and accordingly, the account information may include at least one of a user name, an ID, an email address, an affiliated department, owned devices, and an IP address.

The application usage calculation module 220 may receive usage analysis data for usage of monitoring target applications through a usage analysis application installed in each user device UE1, UE2, UE3, and the like and may calculate application usage for each account based on the usage analysis data of each user device received. That is, the application usage calculation module 220 may calculate application usage of an account in a first period by receiving usage analysis data for one or more monitoring target applications predetermined from each of one or more user devices associated with the account. Meanwhile, calculating application usage of the account in the first period includes determining whether the account uses an application.

In addition, as will be described in detail later, the usage analysis data generated by the usage analysis application installed in each user device may be data collected based on a graphical user interface (GUI) of individual user devices UE1, UE2, UE3, and the like.

The account rating assigning module 230 may determine whether to assign a paid account or a free account to the account in a second period (for example, February) after the first period (for example, January) based on application usage of the account in the first period. For example, when application usage of a specific account is less than a reference value or there is no application usage, a free account may be assigned, and when application usage is greater than or equal to the reference value, a paid account may be assigned.

In this case, according to an embodiment, application usage of each account considered in a decision to assign a paid account or a free account may include frequency of usage dates of each account. According to another embodiment, the management server 20 may assign a paid account or a free account for the next period based on not only application usage of the account but also various factors such as the number of devices registered in the account and the number of applications or application product groups (for example, an MS product group, an Adobe product group, or the like) used in the account.

In addition, the account rating assigning module 230 may, in response to determining to assign a paid account to the account, assign one rating among a plurality of predetermined ratings to the account based on detailed analysis data of application usage of the account.

Meanwhile, even after the account rating assigning module 230 of the management server 20 assigns one rating among a plurality of predetermined ratings to a specific paid account, the account rating assigning module 230 may allow the account to temporarily use a higher rating than the assigned rating as a trial in real time or in a predetermined period unit such as one week if application usage of the account based on received usage analysis data becomes greater than a predetermined reference value. Through this, it is possible to encourage flexible adjustment of the rating of the account for the user of the account, and it is possible to achieve the effect that application usage may be performed without being restricted by the rating of the account. In addition, when application usage becomes less than a predetermined reference value, the account may be allowed to use a lower rating than the assigned rating.

In addition, the fee charging module 240 may charge different fees according to ratings differentially assigned to paid accounts.

As described above, according to embodiments of the present disclosure, by assigning paid accounts and free accounts to each account based on actual application usage, and the like of each account and the like, and by assigning ratings in the case of paid accounts, it is possible to reasonably calculate application usage fees to be paid by each account or by institutions to which the accounts belong, and remarkable effects of providing grounds for being protected against indiscriminate threats of copyright law violations may be obtained.

Furthermore, according to embodiments of the present disclosure, application usage patterns and habits of each account and of institutions to which the accounts belong may be identified, and accordingly, effects of effectively managing kinds and numbers of applications to be used by each account or by the institutions may be obtained.

### A method for assigning ratings to accounts based on application usage

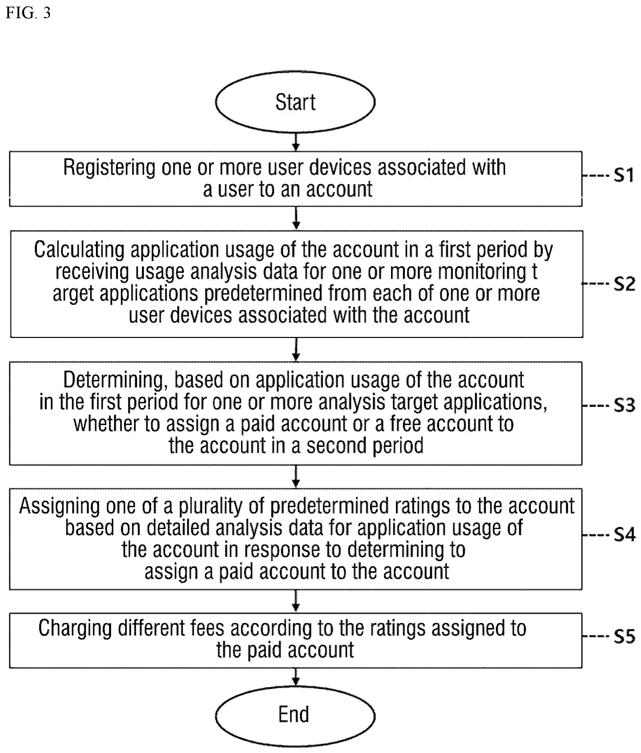

FIG. 3 is a flowchart illustrating a method for assigning ratings to accounts based on application usage according to an embodiment of the present disclosure.

Referring to FIG. 3, in step S1, one or more user devices associated with a user may be registered in an account. In the case where a user using one account has a plurality of devices, or in the case where two or more users are linked to one account, a plurality of user devices and a plurality of users may be registered in the account.

In step S2, application usage of the account in a first period may be calculated by receiving usage analysis data in the first period for one or more monitoring target applications predetermined from each of one or more user devices associated with the account. That is, when one or more user devices are associated with a specific account, application usage of the account may be calculated by combining usage analysis data from each user device.

In step S3, it may be determined whether to assign a paid account or a free account to the account in a second period (for example, February) after the first period (for example, January) based on application usage of the account in the first period.

In this case, according to an embodiment, application usage of each account considered in a decision for allocation of a paid account or a free account may include frequency of usage dates of each account. According to another embodiment, a paid account or a free account may be assigned for the next period based on not only application usage of the account but also various factors such as the number of user devices registered in the account and the number of applications or application product groups (for example, an MS product group, an Adobe product group, or the like) used in the account.

In step S4, in response to determining to assign a paid account to the account, one rating among a plurality of predetermined ratings may be assigned to the paid account based on detailed analysis data of application usage of the paid account. For example, an upper paid account capable of receiving an upper paid subscription service or a lower paid account capable of receiving a lower paid subscription service may be assigned to the paid account.

Meanwhile, detailed analysis data of application usage considered for assigning a rating to the paid account may be collected based on a graphical user interface (GUI) of each user device by a usage analysis application (usage analysis App) executed in each user device. According to an embodiment, detailed analysis data may be collected by the usage analysis application based on whether a graphical user interface corresponding to a monitoring target application is displayed on a screen of the device, and if displayed, whether it is displayed in the foreground or in the background.

In step S5, it may be set to charge different fees according to ratings differentially assigned to paid accounts.

### Method of collecting usage analysis data for applications

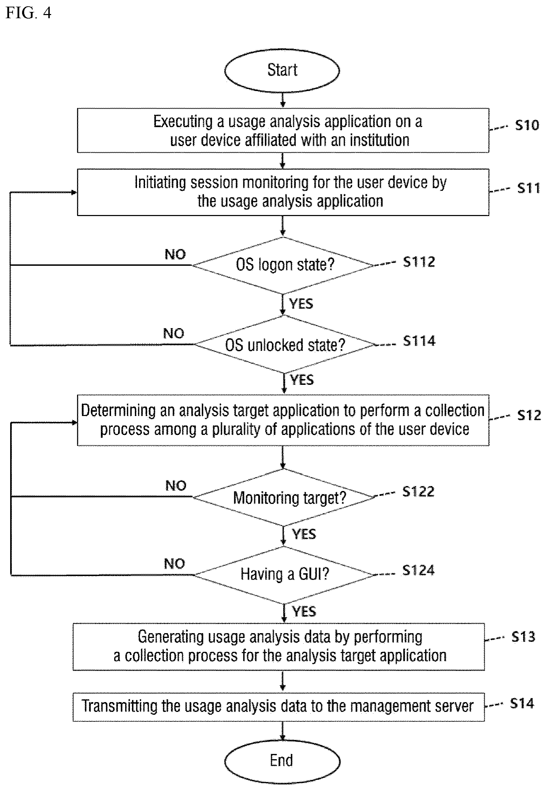

FIG. 4 is a flowchart illustrating a method of collecting usage analysis data for applications according to an embodiment of the present disclosure.

Referring to FIG. 4, in step S10, a usage analysis application may be executed on a device associated with an account. The usage analysis application executed on each device may have no separate user interface and may operate in the background. Alternatively, the usage analysis application may allow checking, through a simple user interface, whether the usage analysis application is currently running in the background. Such a usage analysis application may be configured by default to automatically execute whenever the device is turned on, once it is installed.

In step S11, session monitoring for the device may be initiated by the usage analysis application. Such session monitoring corresponds to a process of determining whether to initiate a data collection process in which the usage analysis application collects data on the usage of a plurality of applications of the device.

According to an embodiment, when the session monitoring by the usage analysis application is initiated, it may be determined whether the user is in a logon state in the operating system (OS) (step S112), and if it is determined that the user is in a logon state in the OS, it may be further determined whether the OS is in an unlocked state (step S114). Here, an OS logon state refers to a state in which a user must enter a preset password into the OS or perform an operation such as a click to enter a normal operating state of the OS (that is, a state in which the user is able to use applications on the OS). In addition, the OS being in a locked state may refer to a state in which, for example, when the device is a laptop, after the user has logged on, the user does not use the laptop for a predetermined period of time or closes the laptop cover (including the display part), and must perform an operation such as re-login or a click to return the OS to a normal operation state. If the OS is not in a logon state or is in a locked state, the OS is not in a normal operation state, and thus, even though the OS of the device is running, there is no need to perform usage analysis, so the process may not proceed to a step of collecting usage analysis data.

In step S12, if the OS is in a logon state and is not in a locked state, the usage analysis application may determine, among a plurality of applications of the device, a monitoring target application for which to perform a data collection process to collect usage analysis data.

According to a non-limiting example, the determination of the monitoring target application may include a step S122 of sequentially determining, for each application (i.e., process) currently running on the device, whether it is included in a preset list of monitoring applications, and a step S124 of determining whether the application has a graphical user interface (GUI). Step S122 is for determining whether the currently running application is a monitoring target, and step S124 is for determining whether the application has a graphical user interface so as to confirm whether it is actually available for work by the user. That is, among the monitoring target applications, applications having a GUI may be selected and determined as actual monitoring targets.

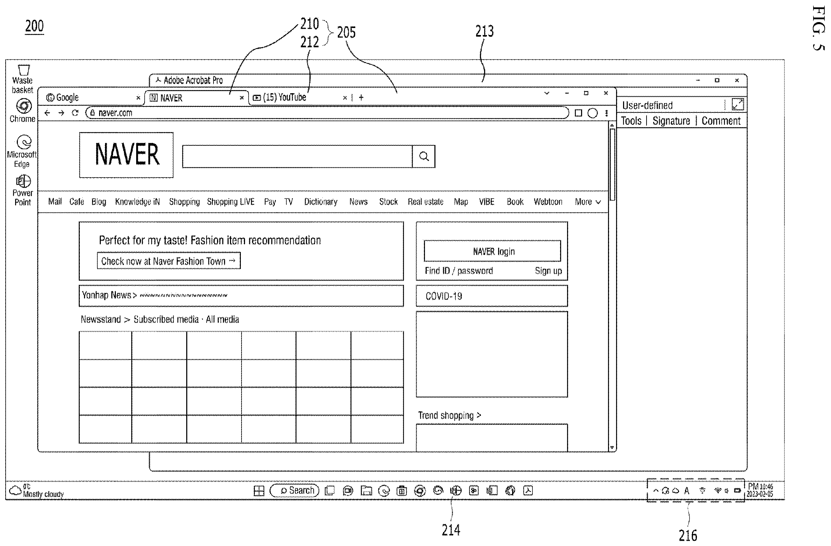

In step S13, the usage analysis application may perform a collection process for the monitoring target application determined in step S12 to generate usage analysis data. The collection process may include a procedure of determining whether the user has actually performed work on the application, based on the status of the graphical user interface corresponding to the application. Such determination may be performed based on a preset time interval or rule. This will be described in more detail below with reference to FIG. 5.

In step S14, the usage analysis data including the result of performing the collection process may be transmitted to a management server. According to an embodiment, such usage analysis data may be converted into an XML format and transmitted to the management server, although the format of the transmitted data is not limited thereto.

### A usage analysis data collection process based on a graphical user interface

FIG. 5 is a diagram illustrating a specific example of a usage analysis data collection process based on a graphical user interface according to an embodiment of the present disclosure.

Referring to FIG. 5, as described above, in the collection process, the usage analysis application analyzes usage of each of a plurality of monitoring target applications 205, 2013, 214, and 216 based on a state of a graphical user interface (GUI) of each application.

According to an embodiment of the present disclosure, the usage analysis application may assign different state identifiers (for example, GUI_ON or GUI_OFF) depending on whether the graphical user interface (GUI) of each application is displayed on a screen of the device, and may assign different state identifiers (for example, Focus_ON or Focus_OFF) depending on whether the graphical user interface is arranged in the foreground even if it is displayed on the screen. Further, even when a specific application includes a plurality of tabs, usage may be analyzed based on assigning different state identifiers (e.g., Focus_ON or Focus_OFF) by distinguishing between the currently foreground tab and the other tabs among the plurality of tabs.

For convenience of explanation, a specific example of FIG. 5 is described, in which the user is actually using the Chrome web browser application 205 on the screen 200 of their user device. According to an embodiment, since the graphical user interface of the Chrome web browser application 205 is displayed in the foreground, a state identifier GUI_ON may be assigned to indicate that the graphical user interface (GUI) is activated.

In the example of FIG. 5, a plurality of tabs exist in the Chrome web browser application 205, and a detailed state identifier of Focus_ON may be assigned to a tab 210 that is currently displayed in the foreground within the graphical user interface of the Chrome web browser application 205, and a detailed state identifier of Focus_OFF may be assigned to a tab 212 that is not displayed in the foreground. This is based on the assumption that the user is currently focusing on and performing work with respect to the tab displayed in the foreground.

In addition, in the example of FIG. 5, it can be seen that a graphical user interface (i.e., window) corresponding to the Acrobat application 213 of Adobe, other than the Chrome web browser 205, is displayed in the background with respect to the Chrome web browser application 205 displayed in the foreground on the screen of the user device. Accordingly, in an embodiment of the present disclosure, for an application such as the Acrobat application 213 displayed in the background of the screen, GUI_ON may be assigned since the GUI is displayed on the screen, but Focus_OFF may be assigned on the assumption that the user is not currently performing work.

Further, in the example of FIG. 5, in the case of an application 214 that has been executed as a monitoring target application but is in a state hidden in the Windows taskbar such that the GUI is not displayed, the usage analysis application may assign GUI_OFF. Likewise, in the case of an application 216 that is executed as a startup program or the like and is included in the Windows taskbar as a tray icon but with which the user is not performing work, the usage analysis application may assign GUI_OFF.

Meanwhile, even when the user is not displaying a GUI on the screen at the current time, there may be a situation in which the user is using the application in parallel with other applications for work. Accordingly, the usage analysis application may determine whether a particular application is actually being used based on periodically checking the graphical user interface (GUI) of each application, or on the duration of GUI_ON and/or Focus_ON, the interval of state changes, and the like. That is, the usage analysis application may analyze the usage of the application by checking the state of the graphical user interface of each application at predetermined time intervals or according to predetermined rules.

As such, according to a usage analysis data collection method based on a graphical user interface according to an embodiment of the present disclosure, the usage analysis application may perform a collection process for a monitoring target application having a user interface (UI) that the user can actually use when the OS operates normally, and in particular, since this collection process performs usage analysis based on a state of the graphical user interface corresponding to the monitoring target application, remarkable effects of providing more accurate and practical usage analysis data compared to conventional usage analysis methods based simply on whether an application is executed are obtained.

### Computer-readable recording medium

The fact that each step or operation of the method according to the embodiments of the present disclosure may be performed by a computer including one or more processors by executing a computer program stored in a computer-readable recording medium is apparent.

The computer-executable instructions stored in the aforementioned recording medium may be implemented through a computer program programmed to perform the corresponding steps, and such a computer program may be stored in a computer-readable recording medium and executed by a processor. The computer-readable recording medium may be a non-transitory readable medium. In this case, the non-transitory readable medium refers to a medium that semi-permanently stores data and is readable by a device, rather than a medium that stores data for a short moment, such as a register, cache, memory, or the like. Specifically, programs for performing the various methods described above may be stored and provided in non-transitory readable media such as semiconductor memory devices, such as erasable programmable read only memory (EPROM), electrically erasable programmable read only memory (EEPROM), and flash memory devices; magnetic disks such as internal hard disks and removable disks; optical-magnetic disks; and non-volatile memory including CD-ROM and DVD-ROM disks.

The methods according to various examples disclosed in this document may be provided as part of a computer program product. The computer program product may be distributed in the form of a machine-readable storage medium (e.g., compact disc read-only memory (CD-ROM)) or may be distributed online through an application store (e.g., Play Store^{™}). In the case of online distribution, at least a portion of the computer program product may be at least temporarily stored in, or temporarily generated in, a storage medium such as the memory of a manufacturer's server, an application store server, or a relay server.

As described above, it will be understood by those skilled in the art to which the present disclosure pertains that the present disclosure may be embodied in other specific forms without changing the technical spirit or essential characteristics thereof. Therefore, the above-described embodiments are to be understood as being illustrative in all respects and not restrictive. The scope of the present disclosure is indicated by the claims described below rather than by the foregoing detailed description, and all changes or modifications derived from the meaning, scope, and equivalent concepts of the claims shall be construed as being included within the scope of the present disclosure.

The features and advantages described in the present specification do not include all of them, and in particular, many additional features and advantages will be apparent to those skilled in the art in consideration of the drawings, the specification, and the claims. Moreover, it should be noted that the language used in the present specification has been selected mainly for readability and instructional purposes, and may not have been selected to describe or limit the subject matter of the present disclosure.

The foregoing description of the embodiments of the present disclosure has been presented for purposes of illustration. It is not intended to be exhaustive or to limit the present disclosure to the precise forms disclosed. Those skilled in the art will appreciate that many modifications and variations are possible in light of the above disclosure.

Accordingly, the scope of the present disclosure is not limited by the detailed description, but is defined by any claims of the application based thereon. Therefore, the disclosure of the embodiments of the present disclosure is illustrative and is not intended to limit the scope of the present disclosure as set forth in the claims below.

## Claims

1. A method for assigning ratings to accounts based on application usage, comprising:
calculating application usage of the account in a first period by receiving usage analysis data based on a graphical user interface in the first period for one or more monitoring target applications predetermined from each of one or more user devices associated with the account; and
determining whether to assign a paid account or a free account to the account in a second period after the first period based on the application usage of the account in the first period.

2. The method for assigning ratings to accounts based on application usage according to claim 1,
wherein the determining whether to assign a paid account or a free account to the account in the second period is further based on the number of user devices that used the one or more monitoring target applications.

3. The method for assigning ratings to accounts based on application usage according to claim 1,
wherein the calculating of the application usage of the account in the first period includes determining whether the account uses an application, and
wherein, based on the application usage of the account in the first period, the determining whether to assign a paid account or a free account to the account in the second period after the first period includes determining to assign a free account to the account based on a determination that the account did not use the application.

4. The method for assigning ratings to accounts based on application usage according to claim 1, further comprising:
in response to determining to assign a paid account to the account, assigning one rating among a plurality of predetermined ratings to the account based on detailed analysis data for the application usage.

5. The method for assigning ratings to accounts based on application usage according to claim 4,
wherein the detailed analysis data includes usage analysis data collected based on a graphical user interface (GUI) of a user device by a usage analysis application executed on each of the one or more devices associated with the account.

6. The method for assigning ratings to accounts based on application usage according to claim 1,
wherein, in the step of determining whether to assign a paid account or a free account to the account in a second period after the first period, the application usage of the account in the first period for one or more monitoring target applications designated in advance includes a frequency of use dates of the account.

7. The method for assigning ratings to accounts based on application usage according to claim 4, further comprising:
charging a service fee on the account based on the rating assigned to the account, wherein the service fee is charged differently for each of the plurality of ratings.

8. The method for assigning ratings to accounts based on application usage according to claim 4, further comprising:
after the assigning of one rating among a plurality of predetermined ratings to the account based on detailed analysis data for the application usage,
allowing a rating higher than the rating assigned to the account to be temporarily used when the application usage becomes greater than a predetermined reference value, or
allowing a rating lower than the rating assigned to the account to be used when the application usage becomes less than the predetermined reference value

9. The method for assigning ratings to accounts based on application usage according to claim 5,
wherein the collecting of usage analysis data based on a graphical user interface (GUI) of a user device by the usage analysis application comprises:
executing the usage analysis application on the device,
initiating session monitoring for the device by the usage analysis application,
determining, by the usage analysis application, a monitoring target application among a plurality of applications of the device to perform a collection process, wherein the determining of the monitoring target application includes sequentially determining, for each application currently being executed on the user device, whether the application is included in a preset monitoring application list, and
generating usage analysis data by performing, by the usage analysis application, the collection process for the monitoring target application.

10. The method for assigning ratings to accounts based on application usage according to claim 9,
wherein the generating of usage analysis data by performing the collection process for the monitoring target application by the usage analysis application comprises:
assigning different state identifiers according to whether a graphical user interface (GUI) of each monitoring target application is displayed on a screen of the device, and
assigning different state identifiers according to whether the application is arranged in a foreground even if displayed on the screen.

11. A management server for implementing a method for assigning differential ratings to an account based on application usage of the account, comprising:
a processor and a memory including computer-executable instructions,
wherein the computer-executable instructions, when executed by the processor, cause the processor to implement:
an application usage calculation module for calculating application usage of the account in a first period by receiving, from one or more user devices associated with the account, usage analysis data based on a graphic user interface for one or more monitoring target applications designated in advance in the first period, and
an account rating assigning module for determining whether to assign a paid account or a free account to the account in a second period after the first period based on the application usage of the account in the first period.

12. A computer-readable recording medium storing computer-executable instructions,
wherein the computer-executable instructions, when executed by a processor, cause the processor to perform operations comprising:
calculating application usage of an account in a first period by receiving, from one or more user devices associated with the account, usage analysis data based on a graphic user interface for one or more monitoring target applications designated in advance in the first period, and
determining, based on the application usage of the account in the first period, whether to assign a paid account or a free account to the account in a second period after the first period.
